(19) Europäisches Patentamt
European Patent Office
Office européen des brevets

(11) **EP 2 684 627 A1**

(12) **EUROPEAN PATENT APPLICATION**

(43) Date of publication:
**15.01.2014 Bulletin 2014/03**

(21) Application number: **12382281.9**

(22) Date of filing: **13.07.2012**

(51) Int Cl.:
*B22C 9/06* (2006.01)    *B22D 17/22* (2006.01)
*B21J 3/00* (2006.01)    *B29C 33/56* (2006.01)
*C09D 1/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Rovalma, S.A.**
**08228 Terrassa (ES)**

(72) Inventors:
- **VALLS ANGLÉS, Isaac**
  **08172 Sant Cugat del Vallés (ES)**
- **HAMASAIID, Anwar**
  **06228 Terrassa (ES)**

(74) Representative: **Elzaburu Marquez, Alberto et al**
**Elzaburu S.L.P.**
**Patents**
**Miguel Angel 21**
**28010 Madrid (ES)**

(54) **Method of material forming processes in preheated or melted state to strongly reduce the production cost of the produced parts**

(57)    A method to manufacture a forming tool, which method can be used in material shaping processes involving heat transference from the shaped part into the forming tool and from the latter to a cooling medium, through the provision of a permanent or semi-permanent isolating and/or releasing layer over the in-cavity surface of the die in combination with the use of high thermal conductivity materials for the die. This method allows to severely reduce the manufacturing cost of the produced part through productivity/durability optimization and continuous monitoring of the process. The system is applicable for all material forming processes involving the heat transfer from the formed part to the forming tool and cooling down of this later during the consecutive forming cycles, in particular for High pressure die casting, semi-solid die casting, squeeze casting, hot forging, hot glass forming and tube manufacturing amongst others.

FIG. 5

EP 2 684 627 A1

**Description**

**Field of the Invention:**

The invention deals with a method for material forming processes that allows to severely reduce the produced part manufacturing cost trough the productivity/durability optimization and process continuous monitoring and a particular way to manufacture dies. In the present invention dies are at least partially made of high thermal conductivity materials and the in-cavity surfaces locally or completely coated with permanent or semi-permanent coatings or/and lubricated with an oil-based lubricant or water-based lubricant. In order to in crease the cooling rate of the formed part and the forming tool or a part of the forming tool, the main body or the concerned zones of the tools made of materials having more than 35 W/m.K as thermal conductivity value or more than 8 mm$^2$/s as thermal diffusivity value, both considered at room temperature. The system is applicable for all material forming processes involving the heat transfer from the formed part to the forming tool and cooling down of this later during the consecutive forming cycles, in particular for High pressure die casting, semi-solid die casting, squeeze casting, hot forging, hot glass forming and tube manufacturing amongst others.

For high pressure die casting, the system allows to reduce the amount of water based or/and oil based spray, applied respectively to less than 20-200 cm$^3$/m$^2$ and to less than 1-10 cm$^3$m$^2$ and tool cooling time accordingly. The layer of the permanent coating or semi-permanent coating in direct contact with the molten alloy usually presents contact angle beyond 100ºC and very weak affinity with the molten alloy. In addition, to the releasing role of the permanent coating or semi-permanent coating, they can act as thermal barrier if the application requires for. The dies of the present invention also present a more aggressive cooling strategy than normal dies, without increasing sensitivity to gross cracking especially for die casting process.

Wet-chemistry coatings can be employed in the present invention to overtake the releasing role and/or thermal barrier role, and then even tool materials with lower thermal conductivity or even low cost non-metallic materials can be employed.

**Background (state of the art):**

There are several processes for forming materials that involve the heat transfer form the formed part to the forming tool. The part either shaped in melted or near melted state which is the case of all casting processes and plastic injection moulding or in a preheated state, which is the case of forging and press hardening processes. The common feature of these processes is related to the fact that the tool is used as heat sink to extract the heat from the part and transport it to the cooling medium. This results in heating up the die during consecutive forming cycles. To establish a reproducible consecutive production cycles, the tool has to be cooled down, during each cycle to a specific temperature depending on the application, where a thermal balance that ensures the realisation of the next cycles in the same condition is found. This thermal balance is a compromise between the part quality required, high productivity and high tool durability. The different mechanisms of heat extraction in which the tool thermal properties play an important role, has a direct impact on the determination of the time required to produce a piece. The temperature difference between the tool and the part is needed to establish the heat extraction processes. However the temperature gradient is also the origin of the cyclic thermal loading generated on the surface of the tool in-cavity and through the tool during the forming cycles, which limit the durability of the tool by well known High Thermal Fatigue Cycle (HTFC) or/and Low Thermal Fatigue Cycle (LTFC). This is especially the case in die casting processes; in particular, High Pressure Die Casting (HPDC), Squeeze Casting and semi-solid die casting. In this point of view, these mechanisms are very similar for the mentioned die casting processes. HPDC is one of the fastest and more cost-effective die casting process that used to produce complex and thin shapes. Due to the fact that in HPDC any thermal barrier is not applied onto the surface of the die in-cavity with the conventional systems, this later suffers from very high thermal cyclic thermal loading that limit its durability. It is therefore reasonable to take this process as representative to highlight the issue relative to the present invention in the following.

In HPDC, the die is preheated before starting the injection cycles, i.e. injection of the molten alloy into its in-cavity, to an adequate temperature (between 100 ºC and 200º C) to prevent generating thermal shock on the surface of the die in-cavity and cracking this later by the same. This is because the pouring temperature of most high pressure cast alloys is very high. For example, for aluminium alloys, the pouring temperature is normally between (650-700 ºC), for Mg alloys the pouring temperature is normally between (650-730 ºC), for Zamac the pouring temperature is between (395 ºC and 425 Cº), for Brass above 900 ºC, etc.

After preheating of the die, to homogenise the temperature of the surface, eliminate the premature solidification of the casting alloy in the various geometry sections of the die in-cavity before complete and compact filling of the die in-cavity and put the die in a suitable thermal equilibrium that allows to produce acceptable pieces, an additional heat up and temperature homogenisation is effectuated by injecting of around 5-15 cycles of molten alloys into the cavity.

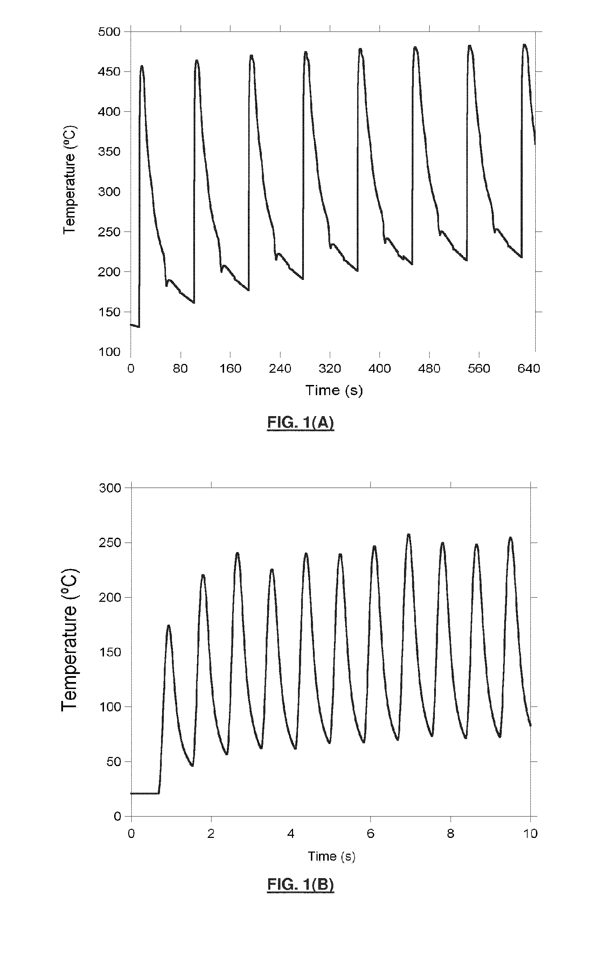

During these cycles, the temperature of the die increases gradually to its equilibrium temperature. Figure 1 (a) shows an example of the die temperature measured at 1 mm below the in-cavity surface during the said starting cycles. From the figure, one can observe the gradual increase of the die temperature during these starting cycles from around 140 ᵒC to around 240 ᵒC after 7 injection cycles after which the reproducible thermal balance of the die is reached for this application. In most of the case, the pieces produced during these starting cycles contain porosities or premature solidification traces because of the low temperature of the die. Some of the pieces produced during this heating up could be considered as scraps. For a given die geometry, productivity, cast alloy, there is a thermal equilibrium condition of the die that assures a compromise between productivity, good quality pieces, and die durability. The thermal equilibrium can be and usually characterised by the die equilibrium temperature. During the starting cycles, in particular for a new die, the process parameters such as pressure and cooling configuration are optimized to reach to this equilibrium production condition. Afterwards, the production of the acceptable pieces starts. For most material forming process involving heat transfer, this thermal balance of the tool is required. Figure 1 (b) show the temperature measured at 0,5 mm below the active surface of a hot forging tool for example.

The equilibrium production condition, for a given die and casting alloy is mostly regulated and fixed by the thermal cycles of the die. During consecutive casting cycles, when the hot molten alloy is injected and contacts the die in-cavity surface, the experience effectuated by the present inventors show that, for example for aluminium alloys die casting the temperature of this die in-cavity increases suddenly, in a fraction of second, to above 500 ᵒC. After this maximum, the die in-cavity surface temperature decreases signalling the diffusion and extraction of the sensible heat of the casting into the die mass via casting-die interface. The heat is then transferred via the die mass into the cooling medium, circulating inside the cooling channels introduced into the mass of the die. This results in dropping down the die in-cavity surface temperature. The intensity of the temperature drops depends mainly on the efficiency of the heat transfer in the four main transfer medium along with latent heat of fusion of the cast alloy:

- Molten alloy mass (especially when the section is thick)
- Die-casting interface
- Die mass
- Cooling Medium

When the temperature of the molten alloy drops to below the solidification points, to a temperature insuring the integrity of the part and resistible mechanical properties to the load of die opening and piece removal, the die is opened to remove the solidified piece. The temperature of the die at opining time depends on the die geometry and cast alloys but it's usually much higher than the equilibrium temperature of the die for the most of cases (for aluminium alloys it is between 350-400 ᵒC). For this reason, after the removal of the pieces, supplementary cooling of the die in-cavity surface is also required, especially for the relatively big dies (above 1000 ton machine) in order to produce the cost-effective pieces, especially in terms of productivity. This is conventionally effectuated externally by spraying a water-based lubricant into the surface of the die in-cavity, either with a robot or manually.

The water based releasing agent applied externally on the die surface, also called lubricant, has also the role of releasing agent. The lubricants contain in general 2-5% of a releasing agent such as polyethylene wax, silicone, etc. When the lubricant is applied on the preheated die surface, the water content evaporates, letting a thin layer of the releasing agent onto the die in-cavity surface to prevent soldering the molten alloy with the same and to facilitate the removal of the next casting.

In HPDC, the spray stage contributes significantly in determining the final cost of the produced part: directly through the cost of the lubricant ((around 100, 000 euro/year for a 1650 ton-Machine for example) and indirectly through its negative impact on the die durability and process productivity. In addition the following inconvenient are associated with the application of a water-based lubricant:

- Producing waste and residual liquids. This generate supplementary costs for cleaning and recycling the residual liquids along with bad working conditions
- Emission of $CO_2$, bad for the environment
- Reducing the die life time through generating a high tension stress on the incavity die surface during spraying (the bulk is hot and the die surface is cold)
- Energy consuming through using complex Robot to apply the lubricant
- Productivity limitation: Halting the production because of the frequent technical problems in the robot.
- Generating thermal shock on the die surface hence limiting its durability
- Increasing scraps and decreasing the quality of the produced pieces (porosity due to the evaporation of the lubricant in ill posed geometry zones.
- Place and installation required

The contribution of the spraying of the water-based lubricant in cooling down the die is important especially for the voluminous pieces (e.g. over 3 kg of weight). For these HPDC applications the die heat up considerably after each filling and solidification stages because of the large amount of the heat removed during solidification stage. In most of the cases the internal cooling of the die is not enough to cool down the die to its equilibrium temperature in a reasonable time in terms of cycle time on the other words productivity. The time and the amount of the external water spray are therefore increased. The external cooling of the die in-cavity surface is therefore indispensable with the conventional die casting systems where the die in-cavity is not coated with a thermal barrier coating.

In the conventional process of HPDC systems, the lubricant has two main positive roles:

- Thermal role: It consists of cooling externally the die in-cavity surface temperature to maintain an adequate equilibrium temperature and balance the thermal condition of the die that can prevent soldering problems, thermal shock at the die in-cavity surface and provide a suitable productivity.

- Mechanical role: It consists of applying a thing releasing agent over the die incavity surface to prevent direct contact of molten alloy with the die in-cavity to prevent the soldering between thermal and facilitate the removal of the solidified pieces.

Because of the important contribution of this stage of process on determining the final production cost of the produced parts, eliminating the spray stage or reducing the disadvantage relative to its application has been one of the main issues and focuses for the foundry industries. Especially in the last two decades, the enlarging of the size of the die casting market and hardening the competitiveness for the industries, the issue attracts much more attention.

Recently, some oil based lubricant with reducing the water content, wax based, powder based lubricants have been the subject of the patents and publication. Recently, a water free or a reduced water content oil based lubricant has been proposed and subject of the patents EP 1818119 A1 and EP P2078953 A1. The invention consists of an oil based lubricant with 0- 7.5 % of water and 70-98 % of a dissolving agent with specific flash points between 70 $\underline{o}$C to 170 $\underline{o}$C. According to this invention the environment concerns of an oil-based lubricant is improved compared to the old used oil based lubricants. In addition, the invented lubricant can be applied with electrostatic method by mean of a robot. According to the invention the thickness of layer deposited can be also controlled.

A water free lubricant based on sericite and/or mica-like and an oil agent is the subject of the patent: JP7053980 (A) — 1995-02-28).

A wax based powder lubricant which can be applied electrostatically for die casting is also commercialised by the company Altea S.RL (http://www.alteasrl.it).

A talc, mica, calcium carbonate and boron nitride mixed with a wax and/or an oil agent is the subject of the patent JP9066340A for squeeze casting applications. In another invention (Patent DE19834966) a carbon based layer coating that can be applied by PVD or CVD process is proposed for die casting applications.

It is worth noticing that several decades ago the oil based lubricant, almost water free, had been employed but due to the disadvantage associated with these types of lubricant and with the requirement for higher productivity, these types of lubricant has been replaced gradually by water based lubricant. The most limitating disadvantages were related to:

- Difficulty to robotise the application
- Large cycle time (due to the loss of cooling effect brought in by the water evaporation at the die in-cavity surface when using a water based lubricant).
- Bad environment conditions such as bad smell and risk of fire.
- Difficulties in reproducing the thin films.

Moreover, all the invention mentioned above deals with the mechanical function of the lubricant in die casting, i. e. the releasing role of the lubricant. They can be considered as efforts to achieve to a relative thin releasing layer (free or reduced content of water) over the surface of the die in-cavity to prevent direct contact of the molten alloy to the in-cavity steel surface, hence facilitate the removal of the pieces after solidification and protect the die in-cavity surface from the chemical reaction and attack by molten alloys. The inventions therefore should be considered as a response for only one role of die lubricant which is the mechanical role. However, the water-based lubricant has also the cooling role that adjusts the suitable thermal balance of the die for a given process, dies geometry and required productivity as discussed before

For the same cooling configuration and die material, replacing the water based lubricant by one of the above methods and products proposed in the mentioned patents, for a given application, results in a gradually increase in the equilibrium temperature of the die compared to the conventional situation with the water based lubricant. The increase in the equilibrium temperature, for the applications where the spray stage play a cooling or a thermal balancer role, results in the perturbation of the thermal balance of the die as and increasing the frequency of the sticking problems and scraps (hot spots) and halt the production. If the oil lubricant is used, this high die temperature results in the deterioration of the oil based lubricant layer because the flash point of most of suitable oil lubricant are between 70 ºC-200 ºC. This could lead to the burnout of the layer and built up of this burned layer, leading to increase the halting frequency of the production, scraps and increasing the cost of the related cleaning process. On the other hand, when the equilibrium die temperature increases to beyond 300 ºC, the frequency of the sticking of the cast alloy to the in-cavity die surface increases, especially for ill posed die geometries. This could end up by halting the production and eventually damaging of the die in-cavity surface. Furthermore, when working with higher equilibrium temperatures, the evaporation of the oil at smoke point increases the porosity inside the produced pieces. In fact for all lubricant for which the bending medium is a type of oil, wax or organic polymer, eliminating the water based lubricant results in some of the above mentioned inconvenient with the conventional die casting system.

In die casting when the molten alloy is brought into contact with the die in-cavity surface, the heat is extracted from the molten alloy via the die in-cavity/molten-alloy interface to the die mass and then via the die mass to the cooling medium. With the conventional casting systems, die cooling is effectuated internally through a network of cooling channels in which the cooling medium is circulated. The cooling mediums are usually oil, water, compressed water and in some rare cases compressed air. In addition to the cooling channel designs and medium, the efficiency of the cooling is limited by the distance of the cooling channel from the die in-cavity surface. This distance is usually between 15mm and 30 mm for high pressure die casting application with the convention tool materials. In fact, the distance is determined by the thermomechnical properties of the die material, the maximum die temperature reached when the molten alloy contacts the die in-cavity surface during filling stage and the temperature and characteristic of the cooling medium.

When the in-cavity surface temperature suddenly increases to its maximum (for example beyond of 500 ºC for aluminium alloys with conventional die casting systems) in a fraction of second when the hot molten metal contacts the in-cavity surface, the temperature at the cooling channel surface is lower (typically between 50ºC to 150 ºC and some times above 150 ºC). This situation creates a strong temperature gradient at the cooling channel surface, nearest to the in-cavity surface, which put this later under high tension stress. The intensity of the tension stress depends on the level of the generated temperature gradient between in-cavity die surface and the cooling channel surface. If the tension passes the elastic limit of the die material, the risk of the crack initiation at the cooling channel surface, in the zone of higher stress concentration is strongly present, especially when corrosion of the cooling channel interface is present. Even for stresses lower than the elastic limit Low Cycle Fatigue (LCF) cracks can be generated and propagated with few cycles, even more if corrosion can occur due to the aggressive nature of the cooling medium and thus stress corrosion cracking (SCC) is induced. This type of crack is known as gross crack or catastrophe crack since it propagates rapidly toward the in-cavity surface provoking the final fracture of the die. It is therefore difficult to increase the efficiency of the cooling playing on this distance for the conventional casting system due to the high risk of the devastator gross cracks.

Sol-gel coatings and sol-gel-like coatings are often applied as scratch-resistant layers, as easy-ta-clean layers, as tribological layers, as catalytic layers, as oxidation protection layers, as corrosion protective coatings or as self-cleaning coatings. But they have not been before applied as release agent layer or wettability modifier layer in tools for material shaping processes, and even less so in die casting as a permanent coating or as a semi-permanent coating. Particularly they have not been employed as release agent or thermal barrier on high conductivity tool materials, and less so in high thermal conductivity tool steels or nickel based alloys. Especially for casting applications and in particular for high pressure die casting.

## Brief description of the drawings

Figure 1 (a): Illustration of the die temperature increase during starting cycles to the thermal balanced condition for HPDC aluminium pieces, 10 Kg of weight casted with a 1650 ton cast machine.

Figure 1 (b): Illustration of the die temperature increase during starting cycles to the thermal balanced condition for a hot forged piece, 0,533 Kg of weight.

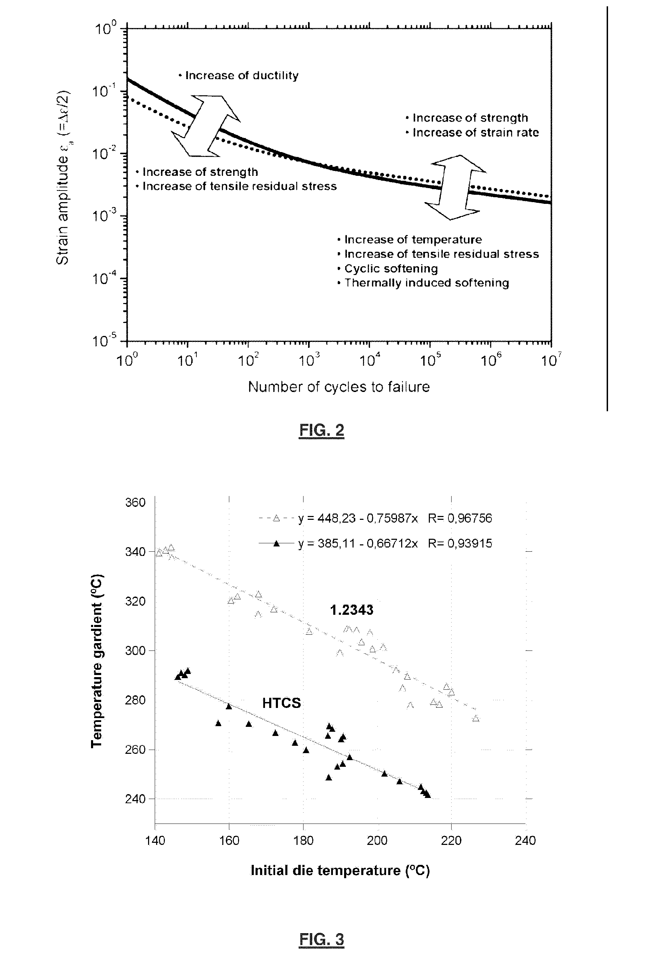

Figure 2: Strain amplitude ($\Delta\varepsilon/2$) vs. number of cycles before failure for most hot work tool steels. Strain amplitude refers to total strain (elastic+plastic). The solid and dotted lines indicate different resistances attainable when changing the tool material mechanical properties. For example, in die casting total strain ranges from 2% to 0.7% ($\Delta\varepsilon/2=$ 0.01 to 0.0035) and thus tool life ranges from a few thousand cycles to hundred thousand. From: Ebner, R., Marsoner S., Siller I., Ecker W., Thermal Fatigue Behaviour of Hot Work Tool Steels - Heat Check Nucleation and Growth, 7th International Conference on Tooling, vol. 1, pp 161-174 (2006).

Figure 3: Temperature gradient at the in-cavity surface vs. initial die temperature

Figure 4: Illustration of the components and configuration of the invented system.

Figure 5: illustration of the systems equipped with a thermal sensor

Figure 6: Temperature Trigger for HTCS and 1.2343 materials at 1,10 and 20mm below the die surface during the filing of the die in-cavtity in High Pressure die casting.

Figure 7: The temperature curves showing the filling and solidification stage for one cycle. The solid and dashed curves correspond to the temperature measured on the HTCS®130 and the 1.2343 side, inside the die, respectively. The higher curves correspond to the temperature measured at 1 mm below the die surface, the intermediate curves correspond to the temperatures measured at 10 mm below the die surface and the lower curves correspond to the temperatures measured at 20mm below the surface of the die.

Figure 8: Die temperature at 1 mm below the die surface for the system of the invention compared to the conventional system. The sudden rise, maximum and drops corresponds to the filling, solidification and die cooling by internal cooling systems. The sudden drops before subsequent cycles correspond the cooling of the die by the water based lubricant.

Figure 9: The maximum die surface temperature reached during filling as a function of the die equilibrium temperature for a conventional 1.2343 and a high thermal conductivity die (HTCS®).

Figure 10: The temperatures of the A380 alloy and of the die at 1 mm, 10 mm and 20 mm below the in-cavity die surface coated with a semi-permanent silicate coating, for 1.2343 and HTCS®130 die during a gravity die casting cycles.

## Detailed description of the invention

The inventors have identified that a way to decrease the final production cost of the part produced by a forming process that involve the heat transference from the shaped part to the forming tool and from the tool to the cooling media is through a system of die casting comprising the following features:

- Using for the die construction, at least partially, a high thermal conductivity material presenting at room temperature a thermal conductivity value of more than 35 W/m.K or a thermal diffusivity value of 8 mm$^2$/s or more; and

- Providing an isolating and/or releasing layer at the in-cavity surface of the forming tool.

Therefore, a first aspect of the invention is directed to a method to manufacture a forming tool for use in material shaping processes involving heat transference from the shaped part into the forming tool, and from the latter to a cooling medium, comprising:

- providing a forming tool comprising a high thermal conductivity material exhibiting at room temperature a thermal conductivity value higher than 35 W/m.K and/or a thermal diffusivity value higher or equal than 8mm$^2$/s; and
- covering the in-cavity surface of the forming tool at least partly with a permanent or semi-permanent isolating and/or releasing layer.

A second aspect of the invention is directed to a forming tool manufactured according to the previous method, characterized in that the forming tool comprises:

- a high thermal conductivity material exhibiting at room temperature a thermal conductivity value higher than 35 W/m.K and/or a thermal diffusivity value higher or equal than 8mm$^2$/s, and
- a permanent or semi-permanent isolating and/or releasing layer covering at least partly the in-cavity surface of the forming tool.

In a third aspect, the invention is directed to the use of such forming tools in a material shaping process involving heat transference from the shaped part into the forming tool, and from the forming tool to a cooling medium.
The High Thermal Conductivity Tool Material helps to accomplish a solution to the problem addressed in the present invention, thanks to the following benefits:

● Reduce the maximum in-cavity surface temperature reached during the first instant of the contact of the processed material with the same,
● Afford the possibility to decrease the distance between the in-cavity surface and the cooling channel surface, nearest to the in-cavity surface,
● Reduce the temperature gradient between the in-cavity surface temperature and the surface temperature of the cooling channels,
● Reduce the cycle time, or minimize the effect on the cycle time when employing a thermal barrier.

For most applications of the present invention it is preferable to reduce or even eliminate the cooling role of the lubricant and the time needed to carry it out, the contribution of this external cooling time into the overall cycle time and the cyclic tension stress suffered by the die, in its in-cavity and through its mass, during the Spray stage and other relative inconvenients mentioned before can be strongly reduced or even eliminated.

The elimination for the need of a cooling role of the lubricant according to the invention is effectuated by reinforcing the internal cooling and decreasing the maximum die surface temperature reached (by employing the High Thermal Conductivity Material for the die), when the molten metal contacts the die in-cavity surface, along with well controlling and monitoring the temperature variation of the die during casting cycles.

With conventional systems, if the releasing and isolating thin layer is produced on the in-cavity surface without spraying of a water based lubricant or any cooling other agents, the die temperature before each cycle that provides a thermal balance to the die during the cyclic production increases for a given die casting application, as detailed before. In this situation, the way to let the die to drop to the suitable temperature ensuring the reproducible thermal balance conditions is by increasing the cycle time for a given application. For most of dies of material forming process involving the heat extraction, the internal cooling systems are usually optimised and the window to more improve it is very narrow. Thus, the die should be kept cooled internally by the integrated cooling system and externally by the convection with air until its thermal balanced temperature, i.e. increasing the production cycle time. This is obviously not desirable because increasing the cycle time has a negative effect on the final cost of the produced parts. The experience showed that for many die casting dies increasing the cycle time by 10% is equivalent to an increase in die lifetime by around 50-70%. Therefore, while dealing with reducing or eliminating the water-based lubricant a compromise should be found between the cycle time modification and expected improvement in die durability by eliminating the spray water based alloy.

With the system of the invention, this problem which is associated with the elimination of the cooling role of the lubricant, is resolved by increasing the efficiency of the internal cooling through employing a material for the die or the concerned zones that have a thermal conductivity above 35 W/m.K preferably more than 42, more preferably more than 48, even more than 55 W/m.K and bringing the cooling channels closer to the die in-cavity surface. For some applications the thermal diffusivity is more relevant and is preferred to be above 8 $mm^2$/s, more preferred to be above 10$mm^2$/s and even more preferred more than 12 $mm^2$/s, and even more than 16 $mm^2$/s. Due to the implications regarding mechanical properties, cost and associated manufacturing costs, it is preferably for many applications of the present invention for the die material with the high thermal conductivity to be an iron or nickel based alloy, more preferably to be a steel and even more preferably to be a hot work tool steel. It is also desirable for many applications of the present invention to have this together with a displacement of the cooling channels so that they are closer to the functional surface of the tool to have a more aggressive internal cooling in the terms expressed in the present document.

The inventors have seen that when employing the present invention, by bringing the cooling channels closer to the in-cavity surface the durability of the die does not decrease, like was until now the accepted consequence as described in the background section, but surprisingly increases. This is because the allowable stress range to fit the SCC on the cooling channel surface will not be violated in the same time the maximum die surface temperature reached during the first instant of contact is decreased as the heat diffusion rate form the in-cavity surface to the cooling media is significantly increased thanks to the high diffusion rate afforded by the high thermal diffusivity material employed for the die. Hence, the cooling role of the lubricant is eliminated or strongly reduced.

This effect can be further improved if a thermal barrier is employed in the form of a permanent or semi-permanent coating. In this case the realizable cycle time with the invented system will often increase, but remain below the cycle time of the conventional solution, and the strain amplitude ($\Delta\varepsilon/2$) on the die surface can be chosen to be below $3,5*10^{-3}$ in the present invention. Indeed, it is evidence that the present invention is used if such low strain amplitudes are used for aluminium die casting while reducing, maintaining or at least not severely increasing the cycle time. Preferred thickness and nature of thermal barriers for certain applications will be detailed later in this document. As can be seen in Figure 2, adapted from the literature, there is a direct relation between fatigue life and dies durability, once the working temperature and mechanical properties of the tooling material are known. And those mechanical properties do not vary all too much when looking at hot work tool steels for die casting and/or nickel base alloys (obviously mechanical properties can be intentionally deteriorated with the introduction of non-metallic inclusions, agglomeration of carbides in grain boundaries, improper heat treatment.... but when referring at realizable mechanical properties with best practice methods, then the relevant mechanical properties for fatigue life with low strain amplitudes do not vary much amongst hot work tool steels). The inventors have observed that it is advantageous for applications, like aluminium die casting, to keep the strain amplitudes below $3*10^{-3}$, but without severely increasing the cycle time employed. It is preferably to keep the strain amplitudes below $2,5*10^{-3}$, more preferably below $1,5*10^{-3}$ and even below $8*10^{-3}$. Since the measurement of surface strain amplitude on a die casting die is not trivial, this can be done for hot work tool steels and/or nickel base alloys through the evaluation of the die life, since there is a direct relationship as can be seen in Figure 2, especially for low strain amplitudes. Thus die lives of 100,000 cycles or more, accordingly 350,000 cycles and accordingly for the last two cases more than 1 million cycles are attained regarding thermal fatigue when the strain amplitudes are the indicated ones. This is so because durability against thermal fatigue is a function of surface strain amplitude, the physical characteristics relating strain to stress (mainly thermal expansion coefficient [$\alpha$], Young's modulus [E] and Poisson's coefficient [v]). For hot work tool steels and/or nickel base alloys usable for die casting, these are considered to be almost constant or varying within a small range. Durability depends also, as mentioned, on the mechanical characteristics of the tool steel employed, and it can be divided into resistance to crack nucleation and resistance to crack propagation. Nucleation is principally related to yield strength at working temperature and propagation to fracture toughness at working temperature. Durability mentioned before refer to total durability, but since the acceptable propagation level of cracks is somewhat subjective in many applications, or depends on post-machining capabilities or location of the critical zone, a comparison based on crack initiation can be made more universal. In that case crack initiation resistance up to 20,000 cycles or more, preferably 60,000 cycles or more, more preferably 120,000 cycles and even 250,000 cycles can be attained in the present invention when the strain amplitude in the surface is fixed at the mentioned levels.

The maximum strain amplitude depends on the die thermal loading, and thus machine size, produced piece weight and geometry amongst others. It becomes a strong singularity of the present invention if the strain amplitudes mentioned are used for machines of 1000Tn or more, more so if the machine is bigger than 1600 Tn and even more when the machine is bigger than 2500 Tn. Also if the singularity of the present invention increases with the weight of the produced piece, thus the strain amplitudes chosen for the present invention are specially singular if the produced piece is 1 Kg or more in weight, more singular if the produced piece is 2 Kg or more and even more singular if the piece is 4 Kg or more.

In die casting for pieces smaller than 1 Kg in weight strain amplitudes smaller than $8*10^{-4}$, more preferably smaller than $7*10^{-4}$ and even smaller than $6*10^{-4}$ are chosen in the present invention. This leads to crack initiation resistances of 300,000 cycles or more, and even 500,000 cycles or more.

Although both high thermal conductivity nickel based alloys and tool steels present similar relevant physical properties (E around 210 GPa and $\alpha$ around 12 $\underline{o}$C$^{-1}$), the mechanical properties and the ease of manufacture make high thermal conductivity tool steels preferable for some applications of the present invention.

As can be seen in figure 3, the dependence between the temperature gradient at the die surface and the die initial temperature, or equilibrium temperature, is linear for most tool materials, and as long as they have similar specific heat, the slopes are also quite the same and around -0.63 (mean taken from several measurements for different die and piece geometries). Then for any application the interception point with the y-axis (temperature gradient) at a given initial temperature can be easily calculated. If this normalization temperature is chosen to be 140 $\underline{o}$C, the gradient is normalized by the following equation:

$$\Delta T_{no} = \Delta T + 0,63 \left( T_{initial} - 140 \right) \tag{1},$$

Where

$\Delta T_{no}$ is the normalized temperature gradient,
$\Delta T$ is the actual temperature gradient and
$T_{initial}$ is the initial die temperature.

Then for the present invention, $\Delta T_{no}$ can be smaller than 310 $\underline{o}$C, preferably smaller than 299 $\underline{o}$C and even smaller than 280 $\underline{o}$C.

As for the isolating and the realising role of the lubricant, the inventor have seen that the isolating and the releasing effect of the said water based lubricant can be replaced, with the invented systems by a permanent or/and semi-permanent coating with negligible chemical affinity with the molten alloys and a bad wettability with the same, an oil based lubricant without or with small amount of water and a water based realising agent with less than 83%, preferably less than 45% and more preferably less than 18% or even less than 9% of water (by weight) compared to the conventional die casting systems for a given die casting application. The surface die in-cavity with the system of the invention is coated or/and sprayed with one or a combination of the following means:

● suitable permanent or/and semi-permanent coating types
● oil based lubricant
● a polymer based lubricant
● powder oil based lubricant

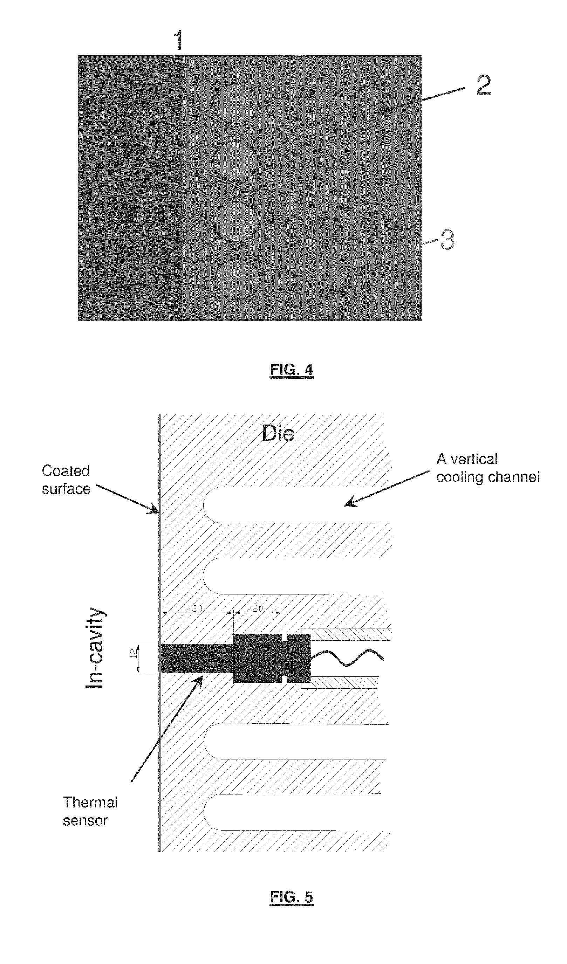

A simple schemas Illustration the main components of the invented system is shown in Figure 4 where:

● 1 is the die in-cavity surface coated or/and lubricated according to claims of the present invention.

● 2 is the die material presenting a thermal conductivity higher than 35 W/m.K according to the claims of the present invention

● 3 is the cooling channels brought more closer to the surface with respect to Equation (3)

With the conventional tool material having the thermal conductivity between 25-35 W/m.K, the experience carried out showed that the maximum heat flux density during the spraying stage is between (1-3) $W/m^2$ depending on the application configurations. This can be considered as an indication for the contribution of the spray into the cooling of the die to its adequate equilibrium temperature and the role that the spray stage has in thermal balancing of the die during production process. With the present invention this contribution is reduced to less than 1 $W/m^2$, or even less than 0.5 $W/m^2$ or more even less than 0.05 $W/m^2$ through increasing the intensity of the internal cooling. The time during which the heat flux density goes down to zero $W/m^2$ is regulated according to the application requirement. When permanent or semi permanent coating is used, there is not spraying stage.

The experience showed that with the invented systems, for casting of an aluminium alloy, the heat flux density during filling of the die is increased by 2-6 $W/m^2$ compared to the conventional die casting system. This compensates the external cooling by the spray stage and even the die temperature drops faster to its equilibrium temperature with only the reinforced internal cooling mechanism. The experience showed that the increase in the efficiency of the internal cooling is proportional to the value of the thermal diffusivity of the material used. As explained in Example 1 and expected from the heat conduction theories, the heat diffusion rate through the die is almost proportional to the thermal conductivity or to the thermal diffusivity values of the die material. This resulted in a proportional increase in the intensity of the heat transfer, in particular during the in-cavity filling and solidification of molten alloy during which the conduction is the dominant heat transfer mode. In fact, most of the heat is absorbed by the die during the solidification stage is removed from the same by the internal cooling media with the invented system.

With the invented systems, the maximum die cavity surface temperature reached during the filling is also reduced by more than 50 ºC and even more than 100 ºC or more even beyond 200 ºC for the same case depending on the value of the thermal diffusivity of the material used for the die. This leads to a decrease in the temperature gradient generated at the surface of the in-cavity by the same value which contribute directly in improving the die durability, i.e thermal fatigue crakes and the performance of the permanent or semi-permanent coating subject of the claims of the present patent. In absolute terms the present invention allows maximum surface temperatures of 510 ºC or less, and even 500 ºC or less which is quite singular to the present invention for pieces of 1 kg or more, more singular for pieces of 3 kg or more and even more singular for pieces of 6 kg or more. Also some executions of the present invention allow for maximum surface temperatures of 480 ºC or less, preferably 460 ºC or less, more preferably 440 ºC and even 420 ºC or less. Also, and specially for executions with thermal barrier, maximum surface temperatures of 400 ºC or less, preferably 380 ºC or less and even 340 ºC or less are possible.

As the most of the heat is extracted through the internal cooling, the spray stage time can be strongly reduced to at least the 1/2, preferably to below 1/4, or even below 1/10 compared to the conventional system , or even in some cases completely eliminated. The spray time in second for the conventional system is accepted to be equal or greater than: Machine Force in tone /100.

If the maximum temperature of the die exceeds 530-550 ºC the risk of sticking is increased with the present invention. Meanwhile, with the present invention the range of allowable equilibrium temperature is much larger than conventional die casting system. The die could reach a thermal balance at low temperature 200 ºC or even less than 150 ºC and in some cases 100 ºC. The die could also reach to a reproducible thermal balance situation with much higher equilibrium temperature, more than 250 ºC, or even 300 ºC and in some cases more than 350 ºC.

For a given application, the inventor found that the equilibrium temperature should be set according to the requirement of the application. If a high productivity and better durability is required the equilibrium temperature has to be increased to an optimum that results in a smallest temperature gradient generated during the filling stage. If the high product quality is required the equilibrium temperature should be at lowest optimum range possible that generates an acceptable temperature gradient at the in-cavity die surface to reduce the risk of the premature failure of the die. The lowest equilibrium temperature results in a high solidification rate of the molten alloy and better mechanical properties of the produced part. This is especially interesting die casting of light alloys for structural parts

The experience shows that for a given die application, with the same cooling system, using a die with a thermal conductivity higher than 45 W/m.K the mechanical strength of an aluminium piece, with a thickness of about 3mm, is increased by 15-20% compared to the same part produced with conventional die casting systems. In this experience, the cooling media was oil, when the cooling media is water and/or a much high thermal conductivity or diffusivity is applied for the die, much more increase in the mechanical strength of the produced part can be obtained.

With the invented system, the spray stage will not play any more any significant thermal role in the process, i.e. in the thermal balance of the die. Taking into account the large increased range of the productive equilibrium temperatures, it is strongly recommended and some times necessary to control and monitor the temperature profile of the die during the casting cycles, especially the maximum and minimum reached during the consecutive cycles. The inventors have seen that a way to deals with this issue is to equip the invented casting systems with temperature sensors to control the thermal balance of the die for an application, i.e. acceptable compromise between tool durability, process productivity and part quality requirement. Figure 5 shows the dimensions of the body of such a sensor. Three thermocouples with intrinsic short response time (less than 200 ms, or even less than 100 ms, preferably les than 50 ms and more preferably less than 2 ms) are introduced in three positions, 1-5 mm, 5-10 mm, 10-20 mm from its active surface. The sensor is introduced into adequate position of the die. During running the casting systems, the temperature signal is introduced and integrated into the control systems of the machine. A relative algorith is associated with the signal of the nearest thermocouple form the die in-cavity surface such that when the maximum temperature and equilibrium die temperature exceeds the programmed range, a signal to reinforcing or reducing the intensity of the internal cooling is generated or/and adapting the process parameters such that the die temperature re-enters into the required range according to the application requirement. If not an error alarm is generated to prevent any undesirable consequence.

It is a particularly advantageous realization of the present invention, when said sensor is used for a closed loop control of the process. A sensor capable of precisely determining any process relevant temperature (like for example, amongst others, the equilibrium temperature and/or the maximum temperature, in a certain position of the die), heat flux density, or any other process relevant variable, can be used to actively control the process through a closed loop control actuating on the internal cooling, external cooling when present and any relevant portion of the cycle time (all of it, solidification time, closed die time, extraction time, spraying time [total, On and/or OFF], amongst others). For some applications it is advantageous when the control variable chosen is monitored at more than one position, with more than one sensor or measuring device. For some applications a more simple or rugged sensor can be used, as long as at least one of the relevant to the process variables can be determined with sufficient precision to be used as monitoring variable for the closed loop control. Such a sensor can be for example a device capable of measuring the temperature of at least two positions of the die at the desired relevant time within the cycle.

The inventors found that the extremely high conductivity hot work tool steel can be produced if one scarifying some of the mechanical properties of the tool steels. Hence, the tool steels with thermal conductively higher than 66 W/m.K or thermal diffusivity higher than 16 mm$^2$/s could be produced. This tool steels can be used in the invented system to decrease drastically the cycle time but a fraction of durability, depending on the obtained tool steel mechanical properties and die geometries, could be reduced.

The inventor found that the durability and the cycle time (one of the main characteristic of the productivity) impact in different way the final production cast of the produced parts. It was therefore necessary, for the invented system, to have an analytical tool that allow to evaluate the nature of the impact of the durability and productivity for a given application, to select the most required high thermal conductivity tool material that allow to reduce the final production cost of a piece compared to the conventional systems. Hence the tool should allow finding a range of compromise between durability and productivity that allow to reduce as much as possible the final cost of the produced part. The inventors found a way to do so is by developing a cost calculation method that takes the cycle time and the die durability as variables. The calculation method developed is summarised in the following Equation:

$$FCP(t,N) = \frac{t_{cycle,invt)}}{t_{cycle,conv}} \left[ LBC, INV, EC, ILB, FAC \right]$$

$$+ \frac{N_{invt}}{N_{conv}} DCC \; + \frac{t_{spray,invt}}{t_{spray,conv}} LUC \qquad (2)$$

Where

● ECP is the estimation of the production cost of a single piece for a given application.
● $t_{cycle, invt}$ is the cycle time estimation when applying the invented method.
● $t_{cycle, conv}$ is the cycle time estimation when applying the conventional method.
● $T_{spray, invt}$ is the spray time estimation when applying the invented method.
● $T_{spray, conv}$ is the spray time estimation when applying the conventional method.
● $N_{invt}$ is the estimation of the durability when applying the invented method.
● $N_{conv}$ is the estimation of the durability when using the conventional method.
● $\lambda_{nvt, HTCM}$ is the thermal conductivity of the die of the invented method.
● $\lambda_{conv}$ is the thermal conductivity of the conventional die.
● K is the constant.
● LCB is the labor cost (direct operator).
● DCC is the die construction cost.
● INV is the Investment cost.
● LUC is the lubrication product cost.
● EC is the energy cost.
● ILBC is the indirect labor cost (administration, maintenance, etc).
● FAC is the factory amortization

With this Equation, for a given application, it is possible to effectuate a calculation by taking the die durability as variable and cycle time as constant. Hence a curve relating the final production cost of the produced part as a function of cycle number (characteristic of the die durability) is produced. The second calculation has to be effectuated by keeping the die durability as constant and cycle time as variable. Hence another curve relating the final cost of the die to the cycle time is produced, for a given estimated die durability. Based on the tendency of the two curves, the utility of the application of the invented systems for a given application is evaluated and decided. Hence in the case of extreme increase in high thermal conductivity, or even for just the application of a material having the thermal conductivity more than 35 W/m.K a compromise between die durability and process productivity could be evaluated.

With the conventional die casting systems the time needed for spray-On time (the stage when the water based lubricant is applied onto the in-cavity die surface) is at least a hundredth of the machine force. Hence for a 1650 ton die casting machine, the spray time is at least 16.5 s or larger. Taking into account the Spray-Off time which usually follow the spray on time during which the in-cavity surface is sprayed with dry air to clean this later and remove the eventual remained water, the spray time should be in some cases much larger than 16.5 s.

The inventors have seen that for the present invention reducing the spraying time below MF / 100 (where MF is the force of the casting machine measured in Tons) does not lead to a die durability decrease as it is customary, but surprisingly for many applications of the present invention it leads to a die durability increase. The inventors have developed the necessary understanding foreground to give a scientific explanation to this effect, as stated in this document. So it is singular, relevant and advantageous in the present invention the usage of a spray-ON time of MF/100 or less, preferably MF/150 or less, more preferably MF/200 or less and even MF/300 or less. For some applications it is even more advantageous when the spray time constraints expressed in this paragraph for spray-ON time, are made more restrictive by making them apply to total spray time including the spray-OFF time.

For some applications, especially when internal cooling and releasing role of the lubricant have been adapted according to the present invention, then spray-O time of MF/400 or less, preferably MF/500 or less or even no spraying at all, are used. Again for some applications it is advantageous to make the constraints made in this paragraph regarding spray-ON time, more restrictive by applying them to total spraying time (including spray-OFF time).

The spray amount in cubic centimetre is roughly equivalent to the force of the machine. Hence for a 1650 ton die casting machine, 1650 $cm^3$ is applied for each casting shot at least. The spray rate is at least 100 $cm^3$/s. A rough estimation shows that, in general between, 0.2 $cm^3$ to 0.3 $cm^3$ of water based lubricant is usually applied on each centimetre square of the die in-cavity surface, including the gating systems. The water based lubricant contains en general 2-3 % of the releasing agent. Hence the releasing agent applied onto each centimetre square of the die in-cavity is less than 0.004 $cm^3$ to 0.006 $cm^3$. If one takes into account the scattering of the mixtures and the eventual occurrence of the Leindenfrost effect, the effective amount of the releasing agent deposited on the in-cavity surface should be much more less. Furthermore, the investigations regarding the lubricant in High Pressure Die Casting have showed that the film of releasing agent formed die on the in-cavity surface after the spray stage is between 50 to 10000 nm. Which means the amount of effective releasing agent on the in-cavity surface is between $5*10^{-6}$ to $1*10^{-3}$ $cm^3$ for each centimetre square of the die-incavity surface.

With the present invention, intrinsically, only this amount is required as the cooling role is eliminated. Thus, if water based lubricant is used. With the present invention, the amount of lubricant that should be applied on each cubic centimetre can be Evaluated with Equation (2)

$$L_{Mach} = L_N \cdot C_L \cdot \left( \frac{1}{Wr\%} \right) \qquad (2)$$

Where

$L_{Mach}$   is the amount of the water based lubricant used in $cm^3/m^2$ of in- cavity surface
$L_N$   is the normalized amount of the lubricant employed on the in-cavity surface.
$C_L$   is a dimensionless constant that depends on the efficiency of the technique. *( = Lubricant reaching the die in-cavity surface / total amount of lubricant employed.).* For perfect efficiency $C_L$=1.
Wr%   is the releasing agent content in the lubricant mixture. For a mixture with no water or any other carrier Wr%=1, and for a mixture with 97% water and 3% oil (or other releasing agent) then Wr%=0.03.

The inventors have observed that for most applications of the present invention $L_N$ should be 4 $cm^3/m^2$ or less, preferably 1 $cm^3/m^2$ or more preferably 0.5 $cm^3/m^2$ or less, and even less than 0.25 $cm^3/m^2$.

For some applications, where the releasing of the part is favoured the inventors have seen that LN should be 0.2 $cm^3/m^2$ or less, preferably 0.1 $cm^3/m^2$ or less, more preferably 0.05 $cm^3/m^2$ or less, and even less than 0.01 $cm^3/m^2$.

Also for the present invention, it is especially advantageous to have a high value for Wr%, while lower values of Wr% are common when conventional lubrication systems are employed, for more advanced lubrication systems like electrostatic methods to apply the lubricant then it is preferably to have Wr%>0.8% more preferably Wr%>0.9% and even Wr%>095%. For sol-gel or direct powder spraying it is preferred in the present invention to have Wr%>0.8, more preferred Wr%>0.98 or even Wr%=1.

The amount of spray then is strongly reduced compared to conventional systems. The reduction of spray amount is proportional to the reduction of the spray stage time and hence the cycle time. In addition, the relative tension strength generated on the in-cavity die surface is reduced accordingly

The inventors have seen that it is also possible to reduce or even eliminate the need for a releasing effect coming from the coating. To achieve that attention was placed on what leads to the sticking of the piece to the die and thus difficulty of extraction and hence need for a releasing agent. It has then been seen that the sticking has normally a chemical and a mechanical nature. The chemical coming from the affinity of the molten alloys with the die material and the mechanical coming from the ability of the molten alloys to flow into superficial defect and thus anchoring there once it solidifies. So the releasing agent normally seeks to tackle both, mainly through little chemical affinity to both molten alloys and die material and through filling of the superficial defects and lowering of the molten alloys propensity to fill the superficial defects through the decrease of the wettability of the molten alloys The authors have seen that in the present invention it is possible to reduce the need for such action, capitalizing on the colder surface temperature of the die, and/or replace at least some of the releasing function of the lubricant by a more efficient agent (efficiency measured on terms of manufactured piece cost - economical, environmental and social-). A further action a release agent can bring is the thermal barrier effect to help reduce the die surface temperature and thus reduce sticking and protect the die durability, but that comes at a cost, since then the cycle time has to normally be increased due to the lower heat transference rate. The thermal barrier effect is still interesting for some applications with the present invention where extreme durability is desirable even at the cost of lower productivities. In fact given the higher thermal efficiency of the dies used in the present invention, the effect becomes much bigger, and thus it is possible in the present invention to attain a thermal barrier that provides a 30 ºC or more temperature drop, preferably a 50 ºC or more temperature drop, more preferably 100 ºC or more temperature drop and even more preferably a 155 or more temperature drop. This further contributes to be able to reduce the strain amplitudes on the tool material by $1*10^{-4}$ reduction or more, preferably $3*10^{-4}$ or more, more preferably by $5*10^{-4}$. In terms of die life regarding heat checking, this corresponds to an increase (to the values previously given for the present invention) of 50.000 cycles or more, often more than 80,000 cycles and even more than 110.000 cycles. If looking only at the crack nucleation, the resistance increase due to this particular implementation of the invention, which is to be added to the dies lives attainable due to the application of the other or more general aspects of the present invention, is increased by more than 10.000 cycles, often more than 35.000 cycles and even more than 55.000 cycles. The thermal barrier effect can also be enhanced by the reduction of the wettability with the molten aluminium, when choosing the right coatings as will shortly be seen, through the decrease of the heat transference coefficient at the interface aluminium/die.

By application of a permanent/semi-permanent coatings, at least partially, that provide a bad wettability with non-ferrous molten alloy, the releasing role of the water based or oil based can be eliminated totally if the contact angle of the molten alloy with the coated surface is high, typically beyond 60º, preferably beyond 100º or even above 120º.

The coating can be based on oxides, nitrides, borides carbides or mixtures thereof each of the alternatives presenting different characteristics and thus making it more appropriate for a particular application. This is the case for example of PVD coated Chromium Nitride (CrN) or PVD and CDV coating or carbon based coating types. Also some transition metals alloys or compounds thereof can be employed. If the contact angle below 120º very little amount of oil or water based lubricant could be used to prevent a possible sporadic soldering, especially when the die in-cavity has an ill-posed geometry for efficient internal cooling and working with a die equilibrium temperature beyond to 250ºC. The amount should be adjusted according to the contact angle of the molten alloy with the permanent coating used and the die equilibrium temperature. This is the case for some type of PV coating, typically TiAlN, CrC types for aluminium die casting.

All the ceramic based PVD coatings such as the ones containing oxides like for example zirconium-oxide ($ZrO_2$), titanium oxide ($TiO_2$), aluminium oxide-alumina ($Al_2O_3$), etc perform very well with the invented system. The lubricant stage, either water based or oil based lubricant can be strongly reduced or even eliminated because of high contact angle of non ferrous molten alloys and weak chemical affinity with their surface, especially for small dies. For big dies with ill-posed geometries, especially with long pin cores, in which the cooling channel could not be integrated, the pin cores should be made of a material with the thermal conductivity higher than 45 W/m.K, preferably higher than 52 W/mK, more preferably higher than 66 W/mK and even more than 71 W/mK and a high thermal capacity while applying the invented system.

Thermal oxidation, at least partially, of the die surface can also be a very advantageous alternative for some applications. The technique allows to somewhat control the thickness of the oxidized layer. Also an oxidation of the surface layer of a nitride surface or combined effect of a nitriding, carburizing, sulfurizing, bururizing and/or oxidizing of the surface can be very advantageous specially for forging processes or other processes suffering from high temperature environmental attack. Like is the case for some forging applications, even extrusion, some castings and other processes exposing parts of the die to aggressive media at high temperatures.

Surface treatments, thermal oxidation and also some continuous ceramic coatings or coatings incorporating metallic phases or any other coating that can at least partially protect or increase the protection level of the substrate from the environmental attack (oxidation, corrosion, amalgam...) are very advantageous for some applications of the present invention, since the resistance of the die material against some of the relevant failure mechanisms can be strongly reduced if environmental aggression is present.

Duplex coatings or any other combination of coatings can also be advantageous for some applications.

When trying to replace only, totally or partially, the releasing role of the lubricant, the thickness for the coating permanent or semi-permanent, either alone, duplex, multilayer or any combination of coatings applied is desirably below 20 μm, preferably less than 10 μm, more preferable less than 5 μm. This is even more so for the parts of the coating presenting a low thermal conductivity since the performance of the systems in terms of heat extraction rate is reduced due to the lower thermal conductivity of the coating layer compared to the material used for the die (substrate) according to the invention systems. This is very relevant for coatings with less than 4 W/mK, more so for coatings with less than 2 W/mK and even more so for coating with less than 1 W/mK. If the coating is a graphite based, carbon based coating or any other coating with a higher thermal conductivity, the preferable thickness range of the same is below 50 μm, preferably 30 μm or less, more preferable 20 μm or less.

When trying to exploit the thermal barrier effect, a thicker coating with low thermal conductivity and/or poor wettability is employed in the present invention. In this case coatings with thermal conductivity below 10.5 W/mK, preferably below 3.5 W/mK, more preferably below 1.5 W/mK and even more preferably below 0.8 W/mK will be favoured. In this case the coatings will be chosen to be 4μm or thicker, preferably 8μm or thicker, more preferably 22 μm or thicker, even more preferably 55 μm or thicker and even 85 μm or thicker. If the coating, or at least some of its constituents, has a higher thermal conductivity than 4 W/mK preferably more than 32 W/mK and even more than 54 W/mK then higher thicknesses can be employed like 110 μm or higher and even 160 μm or higher.

The ceramic, silicate, mica and graphite containing or based coatings can be used advantageously for some applications as permanent or semi-permanent coating in the invented system. Also nano-structured coatings and coatings containing nano-particles, micro-particles, pigments, pastes, flakes or pellets as functional components, part of the binder and/or matrix, can be advantageous. Besides all the projection and deposition techniques mentioned before also electroplating and hot-dip methods can be employed to apply the coating on the tool.

The inventors have found that surprisingly a very advantageous method for many applications of the present invention to apply the coating with the functionality /characteristics herein described is the wet chemistry method, even more preferably sol-gel or likely methods. It was unexpected that this coating method can be employed to generate coatings that successfully reduce the sticking to enable piece extraction, while maintaining its integrity through a considerable number of shots. The advantage of these methods is related to the fact that a very homogenous coating layer with a high adhesion force to the die in-cavity can be obtained, the curing/hardening temperature can be somewhat selected through a big temperature range (from around RT to more than 1000 ºC) with the possibility to somewhat control the thickness and can produce multiphase coatings with different constituents responsible for different functionalities. Some further advantages are that it can be applied locally, restored and removed and different thicknesses can be applied in different locations for a better thermal management. When the application requires the limitation of the heat transfer rate at the tool-part interface for: for example reducing the generated thermal stress inside the die or controlling the solidification rate in a specific zone of the die in-cavity, the coating thickness might be beyond 20 $\mu$m, preferably beyond 50 $\mu$m or even beyond 100 $\mu$m, in addition to the general guidelines regarding coating thicknesses for the present invention.

Besides all active principles mentioned so far in the present invention, the wet chemistry coating, preferably sol-gel or similar methods can incorporate ceramic and metallic particles to tailor conductivity (both electrical and/or thermal) of the coating (including thermal barrier effect) and wettability of molten aluminium. The particles can also be incorporated in the binder. It can also incorporate lubricious agents like graphite, graphite fluoride, natural or synthetic wax, oils, polymers (like for example polytetrafluoroethylene, fluoroethylenepropylene, polyethylene or polyamide), stearates, soaps (like those of aluminium, zinc, magnesium and lithium), higher fatty acids, organic compounds of chlorine, phosphorus and sulphur, fluorides of calcium or barium, phosphates, oxides, hydroxides and sulphides of calcium and zinc, and metals (particularly interesting for some applications: lead, antimony, bismuth, copper, tin, silver, gold, indium and nickel), other organic components, inorganic lubricants (like the ones based on sulphur [like molybdenum disulphide or tungsten disulphide], boron nitride, titanium nitride amongst others), soot and/or other greases. It can also incorporate silica based components, all kinds of nano-particles (for example $TiO_2$ or other conductive oxide like antimony-tin oxide (ATO) and indium-tin oxide (ITO) amongst others), nano-powders for the increase of electrical conductivity of the coating, nano-particles as functional elements and nano-particles as catalysts amongst others). All functionalities described for other coatings can also be incorporated with this method.

For some applications, especially for some casting, tube manufacturing and forging applications, some further characteristics in the wet-chemistry coating can be of special advantage, each one alone or in combination presents advantages for particular applications. Especially interesting is when the coating contains a silicon compound like silane containing coatings (whether organofunctional, hydrolysable, with or without epoxy groups amongst others), siloxane containing coating formulations (whether polysiloxane, heteropolysiloxane, with or without organic component modification, whether prepared by the hydrolysis and condensation process or the sol-gel process amongst others). It is also advantageous for some applications when the coating contains between 4 and 96% by weight, preferably between 8 and 82% by weight and more preferably between 12 and 68% by weight, of binder and between 0 and 90% in weight, preferably 18 to 77% in weight, and more preferably between 27 to 68 % in weight of pigments and/or fillers. It is also advantageous for some applications according to the invention when the binder contains organic compounds, especially polyurethanes, polyesters, epoxy resins, alkyd resins, phenolic resins, melamin resins, acrylates and ethacrylates, organic-inorganic compounds, especially oligo- and polysiloxanes from the hydrolysis and condensation of alkylalkoxysilanes, alkoxysilanes or mixtures thereof, or silicones, silicone resins or organically modified silicone resins, or purely inorganic compounds, especially silicates, polyphosphates and aluminosilicates, or metals, metal alkoxides and their condensation products, metal oxides and metal salts. It is also to advantage that the coating material contains metal or ceramic pigments, besides the already mentioned for other types of coatings and in a general way for the present invention also aluminium, zinc, iron, tin, copper, magnesium, high-grade steel, stainless-steel, nickel, cobalt, manganese, silver or other noble metals or metal salts, and any ceramic specially interesting those presenting low wettability with the processed alloy. Also anticorrosive pigments or corrosion inhibitors (like for example silicates, polyphosphates, tannin derivatives, alkaline sulphonates of alkali and alkaline earth metals, zinc salts of organic nitrogen acids, and phosphates, chromates and molybdates of calcium, magnesium, zinc or aluminium).

In this technology the nano-structuration does not only have to happen at the active agents or particles side, it can also be advantageous for some applications at the matrix or the use of nano-composite binders (especially for high temperature exposition of the coating). The inventors have seen that for many applications the usage of inorganic-organic matrixes is very advantageous. For other applications either organic or inorganic matrixes can be used, even inorganic semi-conductive matrixes can be advantageous when electrical conductivity of the coating wants to be enhanced.

As sol-gel similar methods are meant wet-chemistry methods implying curing, especially when cross-linking (organic and/or inorganic) is involved. Often catalysts will be employed. One example of a sol-gel similar method, which in turn is very advantageous for some instances of the present invention, is a method to cure silanes into siloxanes often in the presence of catalysts (like acids or strong alkali), with a high number of reactive groups / molecule (often 6 to 12) to deliver a flexible coating.

The inventors have realized, that even on the event of die deterioration, especially when cracking or washout are involved, can be at least partially restored with this kind of coatings. The coating can be formulated to flow into the cited defects and minimize the negative effects of their presence or even contribute to their slower progression. So the wet chemistry based coatings can be made to be auto-healing by means of re-application or also due to the incorporation of particles or other elements that can change their structure and/or morphology to act against a failure mechanism. To illustrate the concept an example can be used: the incorporation of particles that change their volume in the event of exposition to air, shear stress or exposition to the processed material, where the change in volume can cause a compressive stress on the tip, filling or deflection of a crack. In addition this method (wet chemistry) can provide high adherence coatings which do not present continuity with the substrate and thus where in the event of cracking of the costing, the cracks can be impeded to progress to the substrate or underlying material, and thus the underlying material can remain crack-free. If the wettability is low enough, cracks on the coating do not jeopardize the releasing effect of the coating.

In addition many wet-chemistry methods (including sol-gel and similar methods) are very cost effective methods compared to other coating process such as thermal spray or Chemical Vapour Disposition (CVD). Furthermore, complex installation is not required for this method. The coating can be effectuated on the die mounted on the machine if the right curing temperature is chosen. For many applications of the present invention it is preferable when the curing temperature lays in the 80-500 $^{\circ}$C, more preferably 100 $^{\circ}$C - 420 $^{\circ}$C and even more preferably 120 $^{\circ}$C - 295 $^{\circ}$C, then an active thermal management of the die can be advantageous to assure an homogeneous curing. For some other applications where it is not a big handicap to remove the die when needs to be cured, higher curing temperatures can be used, like temperatures above 400 $^{\circ}$C and even temperatures above 900 $^{\circ}$C. Also curing temperatures around room temperature are advantageous for some applications. Also, often the solution to be applied can be polarized, and then it is preferably for many applications to use electrostatic spraying techniques to achieve a well distributed coating on the active die surface, reaching ill positioned areas and providing an uniform coating, especially regarding thickness. Curing is advantageous when it is less than 2 hours, more preferably less than 30 minutes and even more preferably when it is 8 minutes or less. The functional particles enumerated along this document can also be attained trough the curing or an additional high temperature process.

The same functionality as with the sol-gel method can be attained by other means in the present invention, especially when using some of the same kind of active components by other means of wet-chemistry, preferably colloid-chemistry, based methods, for example with emulsions, dispersions, aerosol, paints, lacks as a few examples. Each one of the possibilities has some advantages for particular applications, and for several applications the sol-gel method (or similar hardening /curing method) cannot be advantageously replaced.

The inventors have seen that the sol-gel method, sol-gel-like methods or functionally similar wet-chemistry methods, each one with its own particular advantages for different applications, can also be employed with advantage on conventional tool materials with lower thermal conductivity than the tool materials of the present invention. Especially when providing some of the functionality described above, these coatings present a significant advantage for the applications of the present invention and very particularly for forging applications and also for casting applications with special mention to high pressure die casting. When applying this type of coatings to other high thermal conductivity alloys other than the Fe and Ni base, like the W, Mo, Cu, Al, Co or other base, the nature of the support material has to be taken into account when providing the functionality to the coating for an improved performance. Those coatings can also be applied to dies which are not made of metal. It is specially advantageous when die cost is an issue to use concretes (especially interesting for applications with high mechanical loadings are the high resistance concretes with compressive strengths avobe 110 MPa, preferably above 240 MPa, and more preferably above 280 MPa, like is the case for: HPC, UHPC, and many other low water admixture castatables), low cost castatables, or any ceramic concrete or mortar that can be casted. The inventors have seen that for some applications of the present invention it is especially interesting to use materials which are not metals or metals are just present as non-majoritary constituents, but which present high thermal conductivity (like some ceramic materials, some glass materials or graphite based materials like graphene), with high thermal conductivities (also as part of concretes or other castable materials, sintered or consolidated in any other way), preferably 2,4 W/mK or more, more preferably 11 W/mK or more and even 22 W/mK or more. There are many examples of such ceramic materials, to mention some: mullite, sialon, alumina, boron nitride, silicon nitride, even high thermal conductivity glass (like some antimonide based glasses). Also any material which contains such high thermal conductivity toghether with lower thermal conductivity constituents but where the overall thermal conductivity reaches the levels indicated. For some applications, it is advantageous to use very high thermal conductivity ceramic dies or dies containing very high thermal conductivity ceramics or castatable dies containing very high thermal conductivity ceramics (in the case of hexagonal boron nitride nano-ribbons close to 2000 W/mK are attainable). Very high thermal conductivity ceramics means ceramics presenting 77 W/mK or more, more preferably 108 W/mK or more and even more preferably 202 W/mK or more. The better known low cost examples of such ceramic material are: aluminium nitride and silicon carbide. Any mixture of high and/or very high thermal conductivity material is equally as advantageous, also as commented any mixture with other materials not necessarily presenting high thermal conductivity but where the overall conductivity is high enough. The non castatable versions of some of these materials can sometimes not be produced with high dimensions, but special die construction techniques based in the joining of smaller parts can be used, like for example the construction with plates, where even cooling channels can be engraved and are joined together, by pressure, soldering, brazing, adhesives or any other joining technique. For some applications, when the surface finish of the mainly non-metallic material described above is good enough to avoid sticking of the processed piece (for example in the case of some castatables when properly cast, especially against a polymeric material, or is also the case for close to full density ceramic materials, especially advantageous when machinables) then the present invention can be applied without the wet chemistry coating, and use any other releasing agent mentioned in the present invention (oil based, water based, powder...). In some applications it is even especially advantageous without any release agent, when the sticking of the produced piece is low enough.

A very advantageous solution to attain the desired surface finish, and attain sufficient thermal conductivity on some superficial areas or even bulk regions, is the embedding of metal pieces or blocks in the ceramic and/or the usage of metallic or primarily metallic coatings applied by any means of thermal projection including cold spray which in turn is specially advantageous for applications requiring thick depositions. It is especially advantageous when the metallic coating applied has a thermal conductivity of 22 W/mK or more, more preferably when the conductivity is 44 W/mK or more and even more preferably when it is 72 W/mK or more. When using thermal barriers then Cu and Al alloys can be used with thermal conductivities of more than 200 W/mK, which can be advantageous for some applications.

The methodologies described in the previous 4 paragraphs are especially advantageous for casting applications, especially for the casting of light alloys and alloys with melting points below 1250 ºC, preferably below 980 ºC, and more preferably below 780 ºC. Some are also especially advantageous for forging applications and some for the shaping of thick sheets at temperatures above 450 ºC.

The wet-chemistry method, and especially the sol-gel or sol-gel like methods with the type of coatings described in the present invention are very advantageous for the use in the manufacturing of tooling for the tube production, or any likely solicited application (in the sense of being an application requiring very large tools with sufficient thermal loading to induce thermal cracking). Mandrel bars, liners, stoppers, stems and extrusion dies are some examples. One of the most remarkable advantages in this case, is the fact that a fairly homogeneous coating can be achieved throughout the whole surface, despite the very large dimensions often involved, especially in the case of the Mannesmann method, where lengths of more than 15 m and even more than 21 m are not uncommon. The coating can act as a thermal coating, tribological controller (wear and/or friction) but also as a protection against environmental attack amongst others. The same applies to the manufacturing of rolls, and even more for the manufacturing of large rolls (examples are milling rolls, straightening rolls, tube manufacturing rolls, amongst others)

For some applications, where cost of the tool is very critical, polymeric materials can be used as material for the dies. Whether thermoplastics or thermo-setting, polimeric material with high mechanical resistance 60MPa or more areprefered for some applications, even more preferably when they present 120 MPa or more. In this case the coating has to act as a thermal barrier to assure the maximum surface temperature of the polymer does not exceed a temperature associated with degradation of the polymer. Polymers with high thermal conductivity are advantageous. The high thermal conductivity in polymers is often achieved by the incorporation of conducting or semi-conducting charges.

The coating of the present invention can also be applied as a primer for subsequent coating applications to reinforce the functionality or incorporate other functionalities. Also multiple layers can be applied of the same or different coatings, as mentioned for the duplex coatings, but also different types of wet-chemistry method coatings.

For many applications of the present invention is very advantageous when the coating can withstand its functionality for more than one production cycle, preferably more than 15 cycles and even more than 120 cycles. It is particularly advantageous when the coating can be locally restored and even better when this can be done while the die is mounted on the machine, this can be done with some of the coatings of the present invention, specially the wet-chemistry based ones, as described. When the coating performance can be stretched through a whole day's production or trough more than a 20% of the die's life, a further advantage can be attained, since the incidence of the coating is relevant without restitution and/or the coating restitution effort per produced piece is much lower. Thus it is a singularity of the present invention that some wet-chemistry method coatings can be made to maintain their functionality for more than 1,100 pieces, in some instances more than 12,000 pieces, and even more than 54,000 pieces.

It is also possible to apply the mentioned coating with thermal spray method, Chemical Vapor Disposition (CVD) and conventional direct spraying. In conventional direct spraying, the powder of these coating is mixed with a a suitable dissolvent, preferably with evaporation temperature below to 150 ºC. For semi-permanent coatings for the invented system, the thickness of the applied layer is desirably 100 $\mu$m or less, preferably 50 $\mu$m, more preferable less than 20 $\mu$m. The semi permanent coating based on ceramic, silicate and graphite is particularly advantageous, with the invented systems, for a die where the in-cavity surface suffers from high thermal solicitation and premature thermal fatigue cracks, typically for big dies.

Any powder coating based on waxes or/and an organic polymer such as polystyrene, or/and an oil content is used as semi-permanent coating or cyclic lubricant with the invented systems. The waxes and the organic polymers which is used as bender elements must have a high resistance melting or burnout points, desirably above 100ºC, preferably, beyond 150ºC and more preferably beyond 200ºC. While using this coating, it is preferable to control very well the temperature of the in-cavity surface prior to the application of the coating to prevent the built up of the releasing layer when the in-cavity surface temperature is too high. It is preferable, in this case to keep the die equilibrium temperature below to 250ºC.

All release agents that can be polarized can be applied with electrostatic method, to improve the distribution, this can be advantageous for many applications.

All the material that has thermal conductivity higher than 35 W/m.K, preferably more than 40 W/m.K, and more preferably more than 55 W/m.K can be used, according to the invented system, as the material of the die. The system is designed to work optimally with High Thermal Conductivity Tool Steels that presents a thermal conductivity value higher than 35 W/m.K. The advantage of this tool steel is their excellent hardanbility along with maintaining high thermal conductivity or/and thermal diffusivity values and very good mechanical properties. These tool steels with the hardness more than 40 HRc, preferably between 42-46 HRc for big die and more than 42 HRc, or even more than 46 HRC and preferably beyond 50 HRc for small die provides a very good support for the coating, especially PVD, CVD, thermal spray and Sol-gel coatings which ensure more stability of the systems and prevent the premature degradation of the coating layer on the die in-cavity surface.

The high thermal conductivity of the die, results in a higher heat extraction rate from the molten alloy, via the die mass to the cooling media, when the molten alloy contacts the in-cavity surface and solidify. At the first instant of the contact, the in-cavity surface temperature goes up suddenly to its maximum temperature. The maximum temperature with the conventional die casting systems, for most of cast alloys are between 450-550 ºC. When using oil or compressed water as cooling media, the temperature of the same are usually between 100ºC to 200ºC. The sudden rise in die in-cavity surface temperature generates a high tension stress at the surface of the cooling channels, nearest to the die surface. To prevent the gross cracking, the intensity of this stress and the mechanical properties of the die material limit the allowable distance of the cooling channel from the die cavity surface. The efficiency of the cooling systems is therefore limited by this distance for a given die and molten alloys. However, with the present invented systems, due to the higher extraction rate thanks to the high die thermal conductivity, the maximum surface temperature reached during the first instant of the contact of the molten alloy with the in-cavity surface, is considerably reduced, proportionally to the value of thermal conductivity or/and the thermal diffusivity of the same. For example, the experience showed that for aluminium die casting and for a given die geometry and cooling systems, the maximum temperature of the in-cavity reached in this stage is reduced by 50ºC to 100ºC depending on the process parameters, compared to the conventional die casting system.

Therefore, for a given die casting application, the tension stress generated on the cooling channel surfaces, nearest to the in-cavity is reduced proportionally. With the invented systems, the allowable distance of the cooling channel surface, nearest to the in-cavity is therefore reduced. The experience shows that for a die with thermal conductivity beyond 45 W/m.K, the generated tension stress is reduced to around 100 MPa compared to the generated 200 MPa when the die is built of a die conventional tool material 1.2343 and 1.2344 (AISI H11 and H13 respectively) presenting the thermal conductivity value of below 28 W/m.K. For a given die casting application, the distance of the cooling channel, nearest to the cavity surface, is reduced with the invented systems according to the following equation

$$Xinvt = K_x \frac{\lambda_{conv}}{\lambda_{HTCM}} X_{conv} \tag{3}$$

Where

$X_{invt}$    is the distance of the cooling channel surface form the die in-cavity surface when applying the invented systems

$X_{conv}$    is the distance of the cooling channel surface form the die in-cavity surface with the conventional system.

$K_x$    is a dimension less constant to consider the mechanical properties of the material applied. It is value is between 1 and 1.5 depending on the mechanical properties and the surface condition of the cooling channel and cooling media characteristics.

For example, when the thermal conductivity of the material applied according to the invented system is around 50 W/m.K and the mechanical properties is kept as the conventionally used material for a given application for which a cooling channel was 20 mm below the die ―in cavity surface and the die material has a thermal conductivity of around 28 W/m.K. The distance could be reduced to around 11.2 mm.

When reducing strongly the distance of the cooling channel from the in-cavity die surface, it is important to consider the eventual initiation of crack originated from the corrosion of the cooling channel surface known as Stress Corrosion Cracking (SCC). Equation (3) below did not take into account the effect of the corrosion of the cooling channel surface by the cooling media, especially when the cooling media is a type of water. It is important with the invented systems to limit this initiation of SSC since when the cracks initiate, it starts to propagate toward the in-cavity surface by what is known as Low Thermal Fatigue Cycle (LTFC). To do so, the inventor has found that a protective layer coating could be applied on the channels surface with a coating offering cathodic protection and/or neutralizing the cooling media while keeping the maximum stress to 600 MPa or less, preferably 540 MPa or less and more preferably 420 MPa or less.It is particularly advantageous for several applications when the cathodic coating is applied trough a wet-chemistry process.

It is worth noticing that the invented systems can be also applied an all the material forming process that involves the heat extraction from the preheated parts or melted alloys and an external lubrication with a water or oil based alloys. The invented method is especially advantageous for; semi solid casting (also known as thixocasting, rheocasting, thixoforming o thixomolding) of non ferrous alloys such as copper, aluminium, magnesium etc), hot forging, glass forming process, squeeze casting of non ferrous metals.

All thermal conductivity values and thermal diffusivity values indicated in this document refer to values measured at room temperature. It is preferable for many applications when the values indicated can be attained at working temperature.

All coatings or releasing agents referred to in the present document, can be applied entirely to the whole die surface or partially to some more critical areas.

Some further embodiments of the invention can be found in the dependent claims.

**Examples:**

Example 1: Case of Lubricated surface

This example deals with the High Pressure Die Casting of Al-9Si-Mn and Al-10Si-MnMg aluminium alloys. The analysis of this example in qualitative an interpretation point of view is also valid for the case of Squeeze casting and all types of semi-Solid casting under pressure. As the die-casting interface configuration is similar for these casting methods with conventional casting interface system. Furthermore, the in-cavity die surface is lubricated with water or oil based lubricant. The role of the stick lubricated layer is an isolating and realising role. It has not any thermal barrier role like in Gravity or Low pressure die casting (explained en Example 2).

In this example, the in-cavity consisted of a U-profile shape to produce a U-profile part with the thickness of about 3mm. One half of the die (including both the half of the fixed part and the half of the movable part) were built with TCS®130 tool steel having a thermal conductivity of about (55-60) W/m.K. The HTCS®130 hot work tool steel has been recently developed and patented by the company Rovalma, S.A. The other half was built with the conventional tool steel 1.2343 (AISI H11 tool) having a thermal conductivity of around 26 W/m.K. Both half were hardened to 42-44 HRc. A perfect symmetry has been respected in both — HTCS®130 and 1.2343 sides in terms of ate geometry, cavity geometry and cooling channel design, media and configurations. Both sides have been instrumented with smart temperature sensor according to the invented method. The sensor measure the die temperature at different distances, 1mm, 10mm, and 20mm, below its active surface by very fast thermocouples and the alloy surface temperature by a pyrometric technique. The sensors are inserted in both halves in exactly two symmetrical locations in a manner that the active surface of the sensors becomes a part of the die in-cavity surface. The die is mounted on a vacural hot chamber machine, with force of 7500 kN, model Müller-Weingarten. The cast alloys were Al-9Si-Mn and Al-10Si-MnMgs and the pouring temperature was around 715ºC. The piece removal and spray has been effectuated manually during the experimentation. Thousands cycles have been effectuated during the experimentation

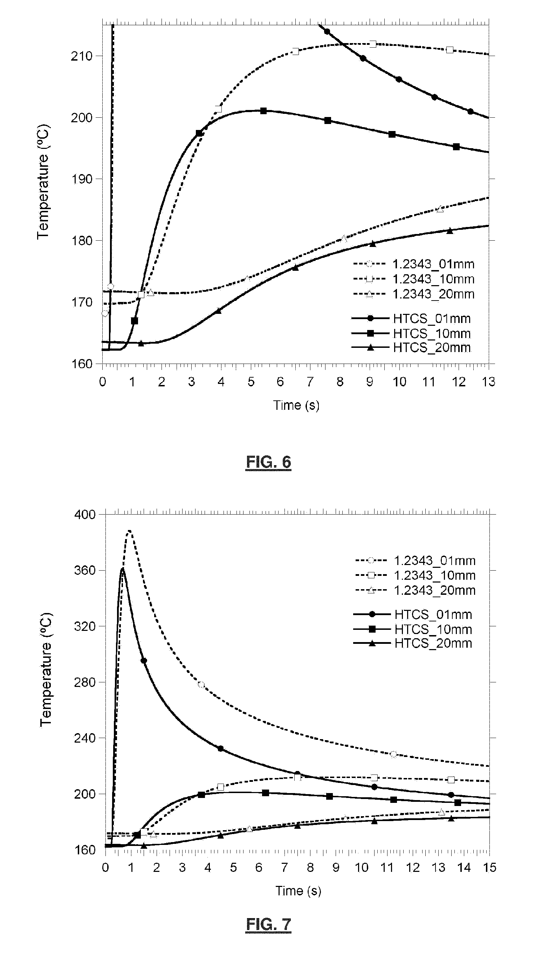

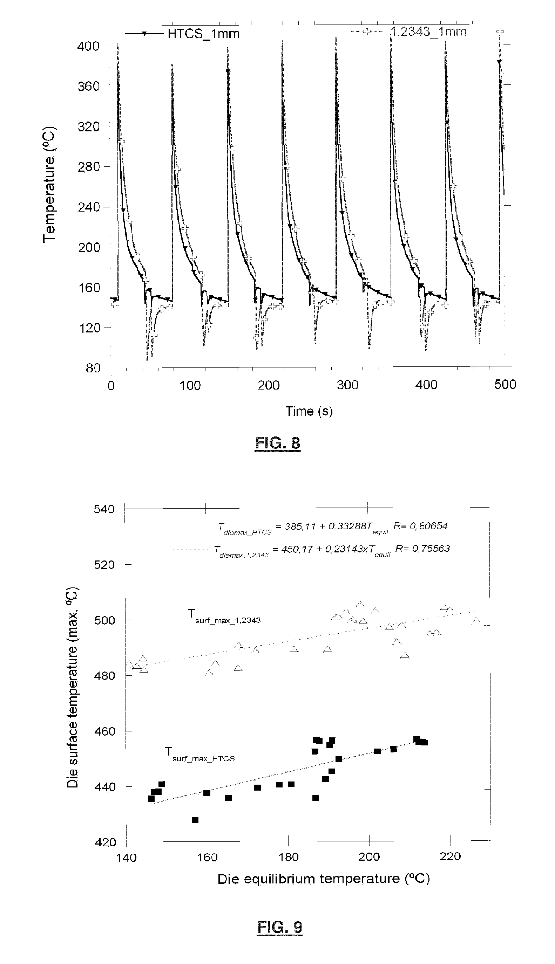

For all the experimentation, the maximum temperature reached in the HTCS®130 was around 50ºC lower than this reached in the 1.2343 side. As can be seen from Figure 6 and Figure 7, the sudden rise of the die surface temperature corresponds of the in-cavity filling stage and hence the first instant of contact between molten alloy and in-cavity die surface. The drop of the surface temperature corresponds to the solidification of the molten alloy inside the die and establishing the heat transfer regime from the molten alloy to the die mass. The trigger and increase of the temperature at the different positions below the die surface signals the diffusion of heat trough the die mass towards the cooling channels. As can be seen, the maximum die in-cavity temperature reached at HTCS®130 side is 50ºC lower than this reached in 1.2343 side. This result was found to be reproducible for all cycles effectuated and for all initial die temperature tested as can be seen in Figure 9. The faster drops of the die surface temperature signal the faster solidification rate in HTCS®130 side. In fact, the analysis shows that the solidification rate was faster by 20% which resulted in the higher mechanical strength in the part solidified against the same by around 20%.

Figure 6 shows the trigger of the temperature obtained at the above mentioned positions below the die surface at the first instant of a casting cycle. The figure show that the trigger of the temperature at 1 mm happens almost at the same time for both steels, at 10mm and 20mm, the trigger of the temperature happens 70% and 57% earlier for the HTCS® material with thermal conductivity around 57 W/m.K at RT compared to the H11 with thermal conductivity around 26 W/m.K at room temperature

The faster heat diffusion rate in HTCS® sides means more efficient internal cooling. As the instrumented die were built in both material, to demonstrate the validity of the invented systems, the spray on the HTCS® 130 side was reduced to near zero, it was found that the HTCS® reaches to the same thermal balance as 1.2343 side thanks to the higher heat diffusion rate. In Figure 8, this situation is illustrated with the temperature profile measured at 1mm below the die surface in both half, for several consecutive casting cycles. As can be seen the die is in a perfect thermal balance in both side, HTCS® 130 with a very small amount of spraying (it was necessary to prevent soldering as in this experimentation, permanent coating were not applied an the die in-cavity surface) and 1.2343 side with a large amount of the spray time.

Example 2

The example deals with the application of the invented systems on gravity die casting or permanent mould casting. This example represents also the situation of Low Pressure Die Casting (LPDC) and Counter Pressure Die Casting (CPDC) as the die surface is usually coated with relatively thick coating to act as a thermal barrier in addition to the realising role when casting with the same. This is because, in this process, the molten alloy is poured in to the die in-cavity either under gravity (case of permanent or gravity die casting) or under a very slow velocity (case of Low Pressure and Counter Pressure Die casting).

In this example, two identical gravity dies have been constructed respectively of 1.2343 hot work tool steel and High Thermal Conductivity HTCS® 130 hot work tool steel. The in-cavity was designed to produce a piece with the dimension 100 x 100 x 10 mm. The alloy cast was A380 (Al-9Si-3Cu) aluminium alloy No internal and external cooling is used in the experiments. A temperature sensor was introduced in the each of both dies, in the same place at cavity centre to measure the die temperature at 1mm, 10 mm and 20 mm below the cavity surface. In addition, the temperature of the molten A380 alloy has been measured by open thermocouples that have been introduced into about 1 mm depth in the in-cavity in the same position, at the die in-cavity centre for both die. Hence, when the molten alloy arrives to this position during pouring, the aluminium liquid makes the junction between the opened wires of the thermocouple and the temperature of the alloy is measured precisely. During the tests, a semi-permanent silicate based coating has been applied onto the die cavity surface by the conventional spraying method under 2 bar of pressure. Prior to the application of the coating, the dies have been preheated to around 130-15$\underline{o}$C. Several trials have been carryout on the two dies.

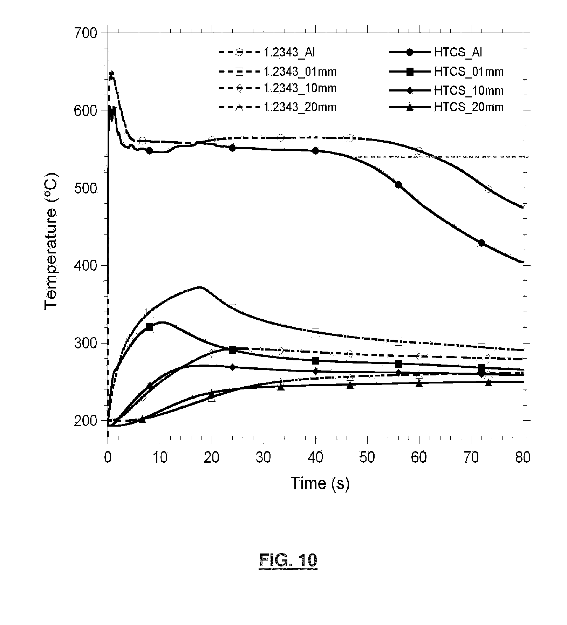

Figure 10 show the temperatures measured for a representative cycle, produced in the same conditions. From the curves of A380 alloy, marked as 1.2343_Al and HTCS_Al respectively for 1.2343 and HTCS®130 dies, on can observe that in the case of HTCS-coated die, the alloy temperature drops to below its solidus points (around 539 $\underline{o}$C) after about 47s of solidification time meanwhile the alloy temperature drops to below its solidus after about 63 s of solidification time. This means the solidification time is decreased by around 34% which is very considerable in productivity point of view. This means also a higher solidification rate by about 34% which has resulted in a finer microstructure of the produced part. In addition, in the case HTCS®130 die the die temperature, at 1mm below the in-cavity die surface, reaches to its maximum 325 $\underline{o}$C after around 10 seconds of solidifications however in the case of 1.2343 the maximum temperature of the die is much higher (about 375 $\underline{o}$C) and reached after 18 seconds of solidification. For the equilibrium temperature used during the tests (200 $\underline{o}$C), this means that the temperature gradient at the in-cavity die surface is reduced by 40% with the HTCS®130 die. This contributes a lot in decreasing the life time of both the die and the semi-permanent coating. From the curves of temperature at 1 mm, 10 mm and 20 mm, on can determine that the maximum temperature gradient through the die is also decreased with HTCS®130 die by 33% and 29% respectively at 10 mm and 20 mm distance below the die surface. This means for the studied case, if one introduces the internal cooling, the cooling channels can be designed to be at least 30% more closer to the in-cavity die surface in the case of HTCS®130 die compared to the conventional 1.2343 die.

Example 3: Sol gel coating.

In this example, the effectiveness of the sol-gel technology to deposit semi-permanent coatings in the in-cavity die surface capable of replacing the release effect of the lubricant was studied. Three high thermal conductivity steel pieces were prepared. One was left uncoated. The other was coated with an inorganic coating containing $Al_2O_3$ and $SiO_4$, finally a third piece was coated with a sol-gel coating containing $TiO_2$ nano-particles, an inorganic/organic matrix and some aluminium and magnesium pigments was applied on the third piece. The third piece was heated on an oxidizing environment and quenched. In this way some cracks were generated on the coating to test its effectiveness in a worn out state. All three samples were dipped into superheated molten aluminium A380 alloy at 750 $\underline{o}$C, and then extracted and the adherence of aluminium evaluated. The dipping time was equal for all pieces. The first piece showed some aluminium adhesion, and the other two did not. This was repeated several times, where the dipping time was varied between 5 to 30 seconds, until the pieces reached a temperature of 280 $\underline{o}$C. At this point the first two pieces had massive adhesion of aluminium, but the third one did not have any adhesion. Finally the aluminium temperature was let drop to the melting point and the dipping repeated. After this dipping all pieces presented aluminium. For the third piece it was a skin which had solidified and which was removed with extreme ease. For the second piece quite some effort was required to remove the aluminium layer, but when achieved the original surface was to be seen. For the first piece it was not possible to remove the aluminium layer accumulated.

**Claims**

1. A method to manufacture a forming tool for use in material shaping processes involving heat transference from the shaped part into the forming tool, and from the latter to a cooling medium, comprising:

   - providing a forming tool comprising a high thermal conductivity material exhibiting at room temperature a thermal conductivity value higher than 35 W/m.K and/or a thermal diffusivity value higher or equal than 8mm$^2$/s; and
   - covering the in-cavity surface of the forming tool at least partly with a permanent or semi-permanent isolating and/or releasing layer.

2. A method to manufacture a forming tool according to claim 1, wherein the releasing layer at least partly covering the in-cavity surface of the forming tool is a composition comprising a lubricant comprising 20% water or less.

3. A method to manufacture a forming tool according to claim 1, wherein the releasing layer over the in-cavity surface of the forming tool is obtained using a wet-chemistry method, preferably a sol-gel or similar method.

4. A forming tool manufactured according to the method claimed in any of the previous claims 1 to 3, **characterized in that** the forming tool comprises:

   - a high thermal conductivity material exhibiting at room temperature a thermal conductivity value higher than 35 W/m.K and/or a thermal diffusivity value higher or equal than 8mm$^2$/s, and
   - a permanent or semi-permanent isolating and/or releasing layer covering at least partly the in-cavity surface of the forming tool.

5. A forming tool according to claim 4, wherein the forming tool is a die for use in material shaping processes such as forging, any casting process, plastic injection molding, glass shaping, High Pressure Die Casting (HPDC), squeeze casting or semi-solid casting.

6. A forming tool according to claims 4 or 5 wherein the isolating releasing layer has a contact angle with the material to be processed in the die material of 60º or more.

7. A forming tool according to claims 5 or 6, wherein the die comprises cooling channels inside, and the distance from the cooling channels to the surface is about the same distance or lower than the diameter of the cooling channel.

8. A forming tool according to claim 7, wherein the cooling channels have a cathodic protection against corrosion.

9. A forming tool according to any of claims 4 to 8 wherein the isolating and/or releasing layer contains O, C, B or N.

10. A forming tool according to any of claims 4 to 9 wherein the isolating layer is a thermal barrier with a thickness of 5 microns or more and a thermal conductivity of 5 W/mK or less.

11. A forming tool according to any of claims 4 to 10 wherein at least part of the material comprising the tool is a tool steel with a thermal conductivity of 42 W/mK or more.

12. The use of a forming tool according to any one of claims 4 to 11 in a material shaping process involving heat transference from the shaped part into the forming tool, and from the forming tool to a cooling medium.

13. The use according to claim 12 wherein the material shaping process is forging, any casting process, plastic injection molding or glass shaping.

14. The use according to claim 12 wherein the material shaping process is High Pressure Die Casting (HPDC), squeeze casting or semi-solid casting.

15. The use according to any of claims 12 to 14 wherein the thermal equilibrium temperature employed in the stationary regime of the material shaping process is higher than 250 ºC or lower than 150 ºC.

16. The use according to any one of claims 12 to 15 wherein the normalized amount of lubricant applied an the forming tool (LN) is 4 cm$^3$/m$^2$ or less, and the application of lubricant takes place with a frequency of one application per every machine cycle or less.

17. The use according to claim 16 where a spray-ON time is applied which is equal to or smaller than: Force of the Machine/150.

18. The use according to claim 14 where the surface strain amplitude ($\Delta\varepsilon/2$) is smaller than $3*10^{-3}$, while keeping a total spray time equal or smaller than Force of the Machine[Ton]/100 and a total cycle time equal or smaller than Force of the Machine[Ton]/50.

19. The use according to any one of claims 12 to 15 wherein the die is sprayed less than once every 20 cycles.

20. The use of a wet chemistry method based coating, preferably sol gel or sol-gel-like, in a manufacturing process involving the shaping of material exposed to more than 150 ºC at some point during the manufacturing process, on any tool material including ferrous and non-ferrous alloys, ceramics, concretes, coated concretes, polymers and mixtures thereof, where the coating acts at least as a thermal barrier and/or release agent.

21. The use according to claim 20, wherein the wet-chemistry coating requires a curing step of 2 minutes or more at a temperature of 40 ºC or more.

FIG. 1(A)

FIG. 1(B)

FIG. 2

FIG. 3

FIG. 4

FIG. 5

FIG. 6

FIG. 7

**FIG. 8**

**FIG. 9**

FIG. 10

Europäisches
Patentamt

European
Patent Office

Office européen
des brevets

**EUROPEAN SEARCH REPORT**

Application Number

EP 12 38 2281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 236 525 A2 (ALCAN TECH & MAN AG [CH]) 4 September 2002 (2002-09-04) <br><br> * the whole document * <br> ----- | 1-6,10, 12-15, 20,21 | INV. <br> B22C9/06 <br> B22D17/22 <br> B21J3/00 <br> B29C33/56 <br> C09D1/00 |
| X | US 2007/054057 A1 (MATJE PETER [DE] ET AL) 8 March 2007 (2007-03-08) <br> * the whole document * <br> ----- | 20,21 | |
| X | US 7 056 395 B1 (GUHA AMITAVA [US] ET AL) 6 June 2006 (2006-06-06) <br> * the whole document * <br> ----- | 1,2,4-6, 12-14 | |
| X | DE 102 24 206 A1 (NGK INSULATORS LTD [JP]; HONDA MOTOR CO LTD [JP]) 12 December 2002 (2002-12-12) <br> * the whole document * <br> ----- | 1,2,4-6, 9,12-14 | |

|  |
|---|
| TECHNICAL FIELDS SEARCHED (IPC) |
| B22C <br> B22D <br> B21J <br> B29C <br> C09D |

The present search report has been drawn up for all claims

| Place of search | Date of completion of the search | Examiner |
|---|---|---|
| Munich | 6 December 2012 | Baumgartner, Robin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 12 38 2281

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2012

| Patent document cited in search report | | Publication date | Patent family member(s) | | Publication date |
|---|---|---|---|---|---|
| EP 1236525 | A2 | 04-09-2002 | EP 1236525 A2 | | 04-09-2002 |
| | | | WO 02064285 A2 | | 22-08-2002 |
| US 2007054057 | A1 | 08-03-2007 | BR PI0411331 A | | 25-07-2006 |
| | | | CN 1805808 A | | 19-07-2006 |
| | | | DE 10326769 B3 | | 11-11-2004 |
| | | | HK 1093706 A1 | | 06-02-2008 |
| | | | JP 2006527090 A | | 30-11-2006 |
| | | | KR 20060052701 A | | 19-05-2006 |
| | | | US 2007054057 A1 | | 08-03-2007 |
| | | | WO 2004110680 A2 | | 23-12-2004 |
| | | | ZA 200509889 A | | 26-03-2008 |
| US 7056395 | B1 | 06-06-2006 | AU 7111500 A | | 26-03-2001 |
| | | | US 7056395 B1 | | 06-06-2006 |
| | | | US 2003098100 A1 | | 29-05-2003 |
| | | | WO 0115837 A1 | | 08-03-2001 |
| DE 10224206 | A1 | 12-12-2002 | DE 10224206 A1 | | 12-12-2002 |
| | | | JP 4574065 B2 | | 04-11-2010 |
| | | | JP 2002361394 A | | 17-12-2002 |
| | | | US 2003024682 A1 | | 06-02-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1818119 A1
- EP P2078953 A1
- JP 7053980 A
- JP 9066340 A
- DE 19834966

**Non-patent literature cited in the description**

- **EBNER, R. ; MARSONER S. ; SILLER I. ; ECKER W.** Thermal Fatigue Behaviour of Hot Work Tool Steels - Heat Check Nucleation and Growth. *7th International Conference on Tooling,* 2006, vol. 1, 161-174